(19) Europäisches Patentamt
European Patent Office
Office européen des brevets

(11) **EP 4 389 704 A1**

(12) **EUROPEAN PATENT APPLICATION**
published in accordance with Art. 153(4) EPC

(43) Date of publication:
**26.06.2024 Bulletin 2024/26**

(21) Application number: **22858532.9**

(22) Date of filing: **19.08.2022**

(51) International Patent Classification (IPC):
*C01B 33/18* (2006.01)    *C01B 33/12* (2006.01)
*C08K 3/36* (2006.01)    *C08L 101/00* (2006.01)

(52) Cooperative Patent Classification (CPC):
**C01B 33/12; C01B 33/18; C08K 3/36; C08L 101/00**

(86) International application number:
**PCT/JP2022/031305**

(87) International publication number:
**WO 2023/022215 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.08.2021 JP 2021134709**

(71) Applicant: **Denka Company Limited
Tokyo 103-8338 (JP)**

(72) Inventors:
• **KOBAYASHI, Takuji
Tokyo 103-8338 (JP)**
• **FUKAZAWA, Motoharu
Tokyo 103-8338 (JP)**
• **OKABE, Takuto
Tokyo 103-8338 (JP)**

(74) Representative: **Murgitroyd & Company
165-169 Scotland Street
Glasgow G5 8PL (GB)**

(54) **SPHERICAL CRYSTALLINE SILICA POWDER AND METHOD FOR PRODUCING SAME**

(57) To provide: a spherical crystalline silica powder which enables a resin molded article having a high coefficient of linear thermal expansion and a low dielectric tangent to be obtained; and a method for producing the same.

Provided is a spherical crystalline silica powder in which the number of water molecules desorbed at 50°C-1,000°C when the temperature is increased from 25°C to 1,000°C at a condition of 30°C/min. is 10 $\mu$mol/g or less, and in which 10 mass% or more of the total powder is $\alpha$-quartz crystal.

Also provided is a method for producing a spherical crystalline silica powder, the method comprising:
(i) heating a spherical amorphous silica powder to obtain a spherical crystalline silica powder;
(ii) bringing the spherical crystalline silica powder into contact with an acid; and
(iii) heating, at 800-1,400°C, the spherical crystalline silica powder treated by (ii).

EP 4 389 704 A1

**Description**

**TECHNICAL FIELD**

The present invention relates to a spherical crystalline silica powder and a method for producing the same.

**BACKGROUND**

Silica powders are widely used as fillers for resins. In particular, spherical silica powders can be filled to high degree with good dispersibility in resins, and therefore, are used preferably as sealing material fillers for semiconductor elements. Sealing material fillers for semiconductor elements preferably have a high coefficient of thermal expansion so as to prevent the occurrence of warping or cracking in the sealing material due to temperature changes during reflow or temperature changes during temperature cycle tests, etc. However, spherical silica powders produced by a flame fusion method, which is one method for producing a spherical silica powder, are amorphous and therefore, tend to have a low coefficient of thermal expansion. Here, attempts have been made to improve the coefficient of thermal expansion and the thermal conductivity of spherical amorphous silica powders by heating at a high temperature to crystallize the amorphous silica powders (for example, Patent Document 1).
It is known that crystalline silica powders take on different crystal structures depending on pressure and temperature. Examples of crystal structures of crystalline silica powders include a-quartz, cristobalite, and tridymite. Patent Document 2 discloses a silica powder having two or more kinds of crystal forms selected from $\alpha$-quartz, tridymite, and cristobalite.

Note that accompanying an increase in information communication volumes in the communications field, the application of high-frequency bands in electronic instruments and communication instruments, etc., has become more widespread. Accompanying the application of high-frequency bands, materials having a low dielectric tangent are demanded in order to prevent circuit signal transmission losses. Patent Document 3 proposes obtaining a spherical amorphous silica with a reduced dielectric tangent by heat treating, at a prescribed temperature for a prescribed time, a spherical amorphous silica powder obtained by a powder melting method.

Patent Document 1: WO 2016/031823 A

Patent Document 2: JP 2005-231973 A

Patent Document 3: JP 2021-38138 A

**SUMMARY OF INVENTION**

The problem of the present invention is to provide: a spherical crystalline silica powder which enables a resin molded article having a high coefficient of linear thermal expansion and a low dielectric tangent to be obtained; and a method for producing the same.

The present inventors discovered that by crystallizing a spherical amorphous silica powder, then bringing into contact with an acid and further subjecting to a heat treatment, it is possible to obtain a spherical crystalline silica powder having a high coefficient of linear thermal expansion and a further reduced dielectric tangent, and that the number of water molecules desorbed at 50°C-1,000°C in the obtained spherical crystalline silica powder is 10 μmol/g or less, which led to the completion of the present invention.

The present invention has the following embodiments.

[1] A spherical crystalline silica powder in which the number of water molecules desorbed at 50°C-1,000°C when the temperature is increased from 25°C to 1,000°C at a condition of 30°C/min. is 10 μmol/g or less, and in which 10 mass% or more of the total powder is $\alpha$-quartz crystal.

[2] The spherical crystalline silica powder described in [1], wherein the degree of crystallization of the total powder, as measured by an X-ray diffraction method, is 30-98%.

[3] The spherical crystalline silica powder described in [1] or [2], wherein 20-90 mass% of the total powder is $\alpha$-quartz crystal.

[4] The spherical crystalline silica powder described in any one of [1] to [3], wherein 0-70 mass% of the total powder is cristobalite crystal.

[5] The spherical crystalline silica powder described in any one of [1] to [4], wherein the content of alkaline-earth metal elements therein is less than 10,000 μg/g by oxide conversion.

[6] A resin composition comprising the spherical crystalline silica powder described in any one of [1] to [5], and a resin.

[7] A method for producing a spherical crystalline silica powder, the method comprising:

(i) heating a spherical amorphous silica powder to obtain a spherical crystalline silica powder;

(ii) bringing the spherical crystalline silica powder into contact with an acid; and

(iii) heating, at 800-1,400°C, the spherical crystalline silica powder treated by (ii).

[8] The production method described in [7], wherein the spherical crystalline silica powder is obtained by heating a mixture of a spherical amorphous silica powder and a solvent in (i).

According to the present invention it is possible to provide: a spherical crystalline silica powder which enables a resin molded article having a high coefficient of linear thermal expansion and a low dielectric tangent to be obtained; and a method for producing the same.

## BRIEF DESCRIPTION OF DRAWINGS

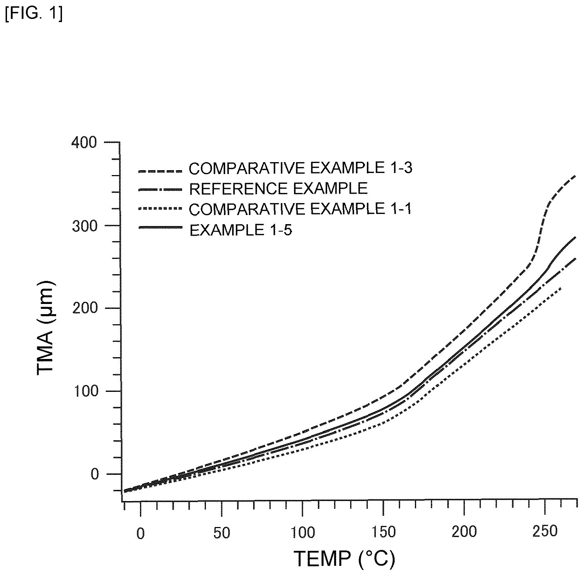

Fig. 1 is a graph showing the thermal expansion behavior, as measured by thermomechanical analysis (TMA), of test pieces comprising a silica powder of Example 1-5, Comparative Example 1-1 (amorphous silica powder), Comparative Example 1-3 (spherical cristobalite crystal), or a reference example (ground quartz).

## DESCRIPTION OF EMBODIMENTS

Hereinafter, embodiments of the present invention will be described in detail. The present invention is not limited to the following embodiments and can be carried out with modifications, as appropriate, as long as the effects of the invention are not inhibited. Note that herein, "-" with regard to numerical ranges means "... or more and ... or less". For example, "X-Y" means X more and Y or less. Note that herein, a "powder" means an "aggregate of particles".

[Spherical crystalline silica powder]

In the spherical crystalline silica powder according to the present embodiment, the number of water molecules desorbed at 50°C-1,000°C when the temperature is increased from 25°C to 1,000°C at a condition of 30°C/min (hereinafter also referred to simply as the "number of desorbed water molecules" or the "number of desorbed $H_2O$ molecules") is 10 μmol/g or less, and 10 mass% or more of the total powder is α-quartz crystal.

"Spherical" means having a projected view with a shape close to circular when observed with a microscope, or the like. Due to being spherical, the powder can be filled at a high content in a resin without fluidity being reduced. Average circularity and a method for measuring the same will be described later.

"Crystalline" here means that the degree of crystallization is 20% or more. A method for measuring the degree of crystallization will be described later. Conventionally, attempts to crystallize a spherical amorphous silica powder have involved trying to raise thermal conductivity by configuring the degree of crystallization to be 80% or more (for example, Patent Documents 1 and 2). However, it was discovered that, surprisingly, a spherical crystalline silica which has a number of desorbed water molecules of 10 μmol/g or less and in which 10 mass% or more of the total powder is α-quartz crystal, irrespective of the degree of crystallization (in both cases in which the degree of crystallization is less than 80% and cases in which the degree of crystallization exceeds 80%), enables a resin molded article having a low dielectric tangent and a high coefficient of linear thermal expansion to be obtained.

The "number of desorbed water molecules" was measured by using a Pyrolyzer GC/MS system (comprising a combination of a gas chromatography mass spectrometer (JMS-Q1500GC) manufactured by JEOL Ltd., and a multi-shot pyroloyzer (EGA/PY-3030D) manufactured by Frontier Laboratories, Ltd.), increasing the temperature from 25°C to 1,000°C at 30°C/min., and measuring an area value of an obtained mass chromatogram (m/z=18) in a 50°C-1,000°C range. The number of desorbed water molecules was calculated from the measured area value by drawing a calibration curve using a standard substance with a known amount of dehydration.

In one embodiment, the number of desorbed $H_2O$ molecules is preferably less than 10 μmol/g, more preferably 9 μmol/g or less, even more preferably 8.8 μmol/g or less, and particularly preferably 8.5 μmol/g or less.

In one embodiment, the number of desorbed $H_2O$ molecules is preferably less than 10 $\mu$mol/g, more preferably 8 $\mu$mol/g or less, even more preferably 6 $\mu$mol/g or less, and particularly preferably 4 $\mu$mol/g or less.

An example of a method for rendering the number of desorbed water molecules so as to be 10 $\mu$mol/g or less is a method involving crystallizing a spherical amorphous silica powder, and then performing a step for bringing the powder into contact with an acid and further subjecting to a heat treatment. The details of the production method will be described later.

By adjusting the temperature or time of the crystallization step, the amount of hydroxyl groups in the surface of the powder can be reduced and thereby it is possible to reduce the number of desorbed water molecules. However, as described above, the crystal form of the spherical crystalline silica powder changes depending on the heating temperature during crystallization, etc., and therefore, there are times when a suitable crystal phase cannot be controlled in the case of a temperature for reducing the hydroxyl groups in the surface of the powder becoming high or a time for reducing the hydroxyl groups in the surface of the powder becoming long. Further, the dielectric tangent of the resin molded article may become high.

The degree of crystallization of the total spherical crystalline silica powder (hereinafter also referred to simply as the "degree of crystallization"), as measured by an X-ray diffraction method, is preferably 30-98%, more preferably 35-90%, even more preferably 38-85%, and even further preferably 38-80%. By configuring the degree of crystallization so as to be 30-98%, a spherical crystalline silica powder having a high coefficient of linear thermal expansion can easily be obtained. The degree of crystallization is calculated from a ratio of the integral area of a peak of a reference crystalline silica measured by X-ray diffraction (XRD) and an integral area of a peak of the spherical crystalline silica (integral area of peak of spherical crystalline silica/integral area of peak of reference crystalline silica).

The degree of crystallization can be adjusted by adjusting the temperature and/or time in the step of crystallizing the spherical amorphous silica powder. Further, the degree of crystallization can also be adjusted by adjusting the temperature and/or time in the step of further heating the powder after crystallization. The degree of crystallization becomes higher with a higher temperature and with a longer time. The preferred temperatures and/or times in the crystallization step and the heating step are described below. Furthermore, it is possible to adjust the degree of crystallization by using a crystallizing agent described later. When the degree of crystallization is adjusted by temperature or time, there are times when it is difficult to control a suitable crystal phase. Therefore, from the perspective of facilitating control of the crystal phase, it is preferable to adjust the degree of crystallization by using the crystallizing agent described later.

From the viewpoint of reducing viscosity when mixed in a resin, the average circularity of the spherical crystalline silica powder is preferably 0.80 or more, more preferably 0.85 or more, and even more preferably 0.90 or more.

The method for measuring the "average circularity" is as described below. After fixing the spherical crystalline silica powder with a carbon tape, an osmium coating is applied. Thereafter, the powder is photographed at a magnification of 500-50,000 using a scanning electron microscope, a projected area (S) and a projected perimeter (L) of a particle constituting are calculated using an image analysis device, and then the circularity is calculated from formula (1) below. Circularities are calculated for 200 arbitrary particles and the average value thereof is used as the average circularity.

$$\text{Circularity} = 4\pi S/L^2 \qquad (1)$$

10 mass% or more of the total spherical crystalline silica powder is $\alpha$-quartz crystal, preferably 20 mass% or more of the total spherical crystalline silica powder is $\alpha$-quartz crystal, and more preferably 30 mass% or more of the total spherical crystalline silica powder is $\alpha$-quartz crystal.

By comprising 10 mass% or more of $\alpha$-quartz crystal, it is possible to obtain a resin molded article having a high coefficient of linear thermal expansion and a low dielectric tangent. Further, thermal expansion behavior close to that of a ground quartz powder can be demonstrated when configured as resin molded article. A ground quartz powder has little dimensional change due to thermal expansion at the reflow temperature vicinity when configured as a resin molded article. Due thereto, it is possible to easily suppress cracking and warping, etc., of the molded article caused by temperature changes before and after a reflow process.

In one embodiment, 40 mass% or more of the total spherical crystalline silica powder may be $\alpha$-quartz crystal, and 45 mass% or more of the total spherical crystalline silica powder may be $\alpha$-quartz crystal.

In one embodiment, preferably 20-90 mass% of the spherical crystalline silica powder is $\alpha$-quartz crystal, more preferably 25-85 mass% of the total spherical crystalline silica powder is $\alpha$-quartz crystal, and even more preferably 30-70 mass% of the total spherical crystalline silica powder is $\alpha$-quartz crystal.

Preferably 0-70 mass% of the total spherical crystalline silica powder is cristobalite crystal, more preferably 0-50 mass% of the total spherical crystalline silica powder is cristobalite crystal, even more preferably 0-40 mass% of the total spherical crystalline silica powder is cristobalite crystal, and particularly preferably 0-36 mass% of the total spherical crystalline silica powder is cristobalite crystal. The spherical crystalline silica powder does not have to comprise cristobalite crystal. In the case of comprising cristobalite crystal, by configuring the content thereof to be 70 mass% or less, a resin molded article having a high coefficient of linear thermal expansion and a low dielectric tangent can be produced more easily.

Preferably 0-70 mass% of the total spherical crystalline silica powder is tridymite crystal and more preferably 0-40 mass% of the total spherical crystalline silica powder is tridymite crystal. The spherical crystalline silica powder does not have to comprise tridymite crystal. In the case of comprising tridymite crystal, by configuring the content thereof to be 70 mass% or less, a resin molded article having a high coefficient of linear thermal expansion and a low dielectric tangent can be produced more easily.

The content of each crystalline form in the spherical crystalline silica powder can be measured by X-ray diffraction measurement and analyzed by Rietveld analysis.

The average particle diameter (volume-based cumulative 50% diameter $D_{50}$) of the spherical crystalline silica powder is preferably 0.1-100 $\mu$m, more preferably 0.2-50 $\mu$m, and even more preferably 0.3-10 $\mu$m. By configuring the average particle diameter of the spherical crystalline silica powder so as to be 0.1-100 $\mu$m, filling properties in a resin are likely to be better. "Volume-based cumulative 50% diameter $D_{50}$" means a particle diameter corresponding to a cumulative value of 50% in a volume-based cumulative particle size distribution measured by using a laser diffraction particle size distribution measuring device (refraction index: 1.50).

The specific surface area of the spherical crystalline silica powder is preferably less than 6 $m^2$/g, more preferably 5.5 $m^2$/g or less, and even more preferably 5 $m^2$/g or less. By configuring the specific surface area of the spherical crystalline silica powder so as to be 6 $m^2$/g or less, it is easy to achieve a lower dielectric tangent. Note that the lower limit of the specific surface area of the spherical crystalline silica powder is preferably no less than 1 $m^2$/g.

In one embodiment, the specific surface area of the spherical crystalline silica powder may be 1-6 $m^2$/g. Note that the specific surface area of the spherical crystalline silica powder indicates a value measured according to the single point BET method by using a fully automated specific surface area and diameter measuring device.

When producing the spherical crystalline silica powder, an alkali metal compound or an alkaline earth metal compound, etc., may be used as a crystallizing agent with an objective of promoting crystallization. From the viewpoint of further reducing the dielectric tangent, the content of alkaline earth metal elements (Be, Mg, Ca, Sr, Ba, etc.) remaining in the powder is, by oxide conversion, preferably less than 10,000 $\mu$g/g and more preferably less than 9,000 $\mu$g/g. The content of alkali metal elements (Li, Na, etc.) remaining in the powder is, by oxide conversion, preferably less than 30,000 $\mu$g/g.

The content (oxide conversion) of the alkali metal compounds and the alkaline earth metal elements in the spherical crystalline silica powder is measured by using an ICP optical emission spectrometer.

From the viewpoint of reducing impurities, it is preferable for the spherical crystalline silica powder to have a content of U of 10 ppb or less, a content of Th of 20 ppb or less, a content of Fe of 200 ppb or less, and/or a content of Al of 1 mass% or less (10,000 ppm or less). The content of the above impurities in the spherical crystalline silica powder is measured by using an ICP optical emission spectrometer.

In a test piece (resin molded article) made using the spherical crystalline silica powder by the method described below, the coefficient of linear thermal expansion (CTE1) at or below a glass transition temperature Tg is preferably $3.5\times10^{-5}$/K-$4.5\times10^{-5}$/K, more preferably $3.7\times10^{-5}$/K-$4.3\times10^{-5}$/K, and even more preferably $3.8\times10^{-5}$/K-$4.0\times10^{-5}$/K. Since the coefficient of linear thermal expansion (CTE1) at or below the glass transition temperature Tg is high, it is possible to prevent warping and cracking during a temperature cycle when a product is used.

In a test piece (resin molded article) made using the spherical crystalline silica powder by the method described below, the coefficient of linear thermal expansion (CTE2) in a temperature region exceeding the temperature glass transition temperature Tg is preferably $10.0\times10^{-5}$/K-$11.5\times10^{-5}$/K, more preferably $10.5\times10^{-5}$/K-$11.3\times10^{-5}$/K, and even more preferably $10.6\times10^{-5}$/K-$11.1\times10^{-5}$/K. Since the coefficient of linear thermal expansion (CTE2) in a temperature region exceeding the glass transition temperature Tg is high, it is possible to prevent warping and cracking during reflow.

As a method for making test pieces, a liquid-state epoxy resin (for example "JER 828" manufactured by Mitsubishi Chemical Corporation) and a hardening agent (4,4-Diaminodiphenylmethane) are mixed at a weight ratio of 4:1, a spherical crystalline silica powder is mixed so as to be 40 vol.% thereof, and the mixture is cured at 200°C to make a cured body. The cured body is processed to a test piece with a size of 4 mm $\times$ 4 mm $\times$ 15 mm.

The method for measuring the coefficients of linear thermal expansion CTE1, CTE2 is performed using a thermal mechanical analysis device in conditions with a measurement range of -10°C-270°C and a temperature increase rate of 5°C/minute, and the coefficient of linear thermal expansion (CTE1) at or below the glass transition temperature Tg and the coefficient of linear thermal expansion (CTE2) in a temperature region exceeding the glass transition temperature Tg are calculated.

The dielectric tangent of a resin sheet made using the spherical crystalline silica powder by the method described later is preferably $7.0\times10^{-4}$ or less, more preferably, $6.9\times10^{-4}$ or less, and even more preferably $6.8\times10^{-4}$ or less. By configuring the dielectric tangent (tan$\delta$) so as to be $7.0\times10^{-4}$ or less, it is possible to more effectively prevent circuit signal transmission losses in electronic instruments and communication instruments having a high-frequency band applied therein.

The dielectric constant ($\varepsilon$r) of a resin sheet made using the spherical crystalline silica powder by the method described later is preferably 2.5 or more, more preferably 2.6 or more, and even more preferably 2.65 or more. By configuring the dielectric constant ($\varepsilon$r) so as to be 2.5 or more, the dielectric constant becomes higher and electronic instruments and communication instruments, etc., can be further miniaturized.

It was discovered that by crystallizing a spherical amorphous silica powder, then bringing into contact with an acid and further subjecting to a heat treatment, it is possible to obtain a spherical crystalline silica powder having a high coefficient of linear thermal expansion and a further reduced dielectric tangent.

The method for making resin sheets involves obtaining a resin composition by mixing a polyethylene resin powder and a spherical crystalline silica powder such that the content of the spherical crystalline silica powder filled therein is 40 vol.%, loading the obtained resin composition into a 3 cm-diameter metal frame at an amount such that the thickness thereof is approximately 3 mm, rendering into a sheet by a nanoimprinting device, and cutting the obtained sheet into 1.5 cm $\times$ 1.5 cm sizes to obtain resin sheets for testing.

The method for measuring the dielectric constant and dielectric tangent involves connecting a 36 GHz cavity resonator to a vector network analyzer, arranging a resin sheet for testing so as to cover a 10 mm-diameter hole provided in the cavity resonator, and measuring a resonance frequency (f0) and an unloaded Q value (Qu). The same measurement is repeated five times with the evaluation sample being rotated 90 degrees after each measurement, and average values of the obtained f0 and Qu values are used as measured values. Analytical software is used to calculate the dielectric constant from f0 and the dielectric tangent (tan $\delta$c) from Qu. Note that as measurement conditions, measurement temperature is 20°C and humidity is 60%RH.

The thermal conductivity of the spherical crystalline silica powder, measured in a resin sheet made by the method described later, is preferably 0.48 W/mK or more, more preferably 0.50 W/mK or more, and even more preferably 0.55 W/mK or more. By configuring the thermal conductivity so as to be 0.48 W/mK or more, the thermal conductivity of the fabricated resin sheets can be improved.

The thermal conductivity can be improved by crystallizing a spherical amorphous silica powder. It was discovered that after crystallization, by bringing the silica powder into contact with an acid and subjecting to a heat treatment, the thermal conductivity is further improved.

Thermal conductivity is a value calculated by multiplying the thermal diffusivity, measured by the method described below, by specific gravity and specific heat.

The thermal diffusivity was determined by a laser flash method using a processed resin sheet. A xenon flash analyzer (product name: LFA 447 NanoFlash; manufactured by Netzsch) was used as the measurement device. As a method for making resin sheets, a liquid-state epoxy resin (for example, "JER 828" manufactured by Mitsubishi Chemical Corporation) and a hardening agent (4,4-Diaminodiphenylmethane) are mixed at a weight ratio of 4:1, a spherical crystalline silica powder is filled so as to be 40 vol.% thereof, and the mixture is cured at 200°C to make a cured body. The cured body is processed to a disk-shaped test piece having a diameter of 10 mm $\times$ a thickness of 1 mm.

The specific gravity of the powder was determined by using the Archimedes method.

The specific heat was determined by using a differential scanning calorimeter (product name: Q2000; manufactured by TA Instruments) and increasing the temperature from room temperature to 200°C at a temperature increase rate of 10°C/minute in a nitrogen atmosphere.

(Use)

The spherical crystalline silica powder according to the present embodiment can be filled at a high content and with good dispersibility in a resin, and therefore, can be used as filler of resin molded articles for various uses such as electronic instruments and communication instruments, etc. In particular, since it is possible to obtain a resin molded article having a high coefficient of thermal expansion and a low dielectric tangent, the spherical crystalline silica powder according to the present embodiment can be preferably used to produce a semiconductor sealing material for electronic instruments and communication instruments, etc., which have a high-frequency band applied therein. A resin molded article comprising the spherical crystalline silica powder can suppress cracking and warping, etc., in temperature cycles during use and temperature changes before and after a reflow process.

[Production Method]

The method for producing the spherical crystalline silica powder according to the present embodiment comprises:

(i) heating a spherical amorphous silica powder to obtain a spherical crystalline silica powder;

(ii) bringing the spherical crystalline silica powder into contact with an acid; and

(iii) heating, at 800-1,400°C the spherical crystalline silica powder treated by (ii).

The production method may also comprise a step (i') of preparing a spherical amorphous silica powder before step (i).

<Step (i'): spherical amorphous silica powder preparation step>

In step (i'), which the production method may comprise arbitrarily, a spherical amorphous silica powder is prepared. As the spherical amorphous silica powder, it is possible to use a powder produced by a conventional and publicly-known method. However, from the viewpoints of productivity and production cost, it is preferable to use a spherical amorphous silica powder produced by a flame fusion method. In a flame fusion method, an ore powder is sprayed into a high-temperature flame formed by a combustible gas and a supporting gas by using a burner and fused and spheroidized at a temperature equal to or higher than the ore powder melting point (for example, a temperature of 1,800°C or more).

From the viewpoint of cost reduction, the raw material is preferably a mineral and/or ore ground product. Examples of the mineral or ore include silica sand and silica stone. The average particle diameter of the raw material is not limited and may be selected, as appropriate, from the viewpoint of workability.

The average particle diameter (volume-based cumulative 50% diameter $D_{50}$) of the raw material is preferably 0.1-100 $\mu$m, more preferably 0.2-50 $\mu$m, and even more preferably 0.3-10 $\mu$m.

The obtained spherical amorphous silica powder is classified as necessary.

The average circularity of the spherical amorphous silica powder is preferably 0.80 or more, more preferably 0.85 or more, and even more preferably 0.90 or more. The method for measuring the average circularity is as described above.

The average particle diameter (volume-based cumulative 50% diameter $D_{50}$) of the spherical amorphous silica powder is preferably 0.1-100 $\mu$m, more preferably 0.2-50 $\mu$m, and even more preferably 0.3-10 $\mu$m.

<Step (i): crystallization step>

In step (i), the spherical amorphous silica powder is heated to obtain a spherical crystalline silica powder. The spherical amorphous silica powder is crystallized by being heated at a prescribed temperature to obtain a crystalline silica powder. In order for 10 mass% or more of the total powder to become $\alpha$-quartz crystal, the heating temperature is preferably 900-1,250°C, more preferably 950-1,200°C, and even more preferably 1,000-1,200 °C. The heating time is preferably 2-40 hours, more preferably 3-30 hours, and even more preferably 4-24 hours. The heating method is not particularly limited and may be performed with a publicly-known electric furnace, or the like. Thereafter, the powder is cooled to an ambient temperature (26°C).

The spherical crystalline silica powder enables a resin molded article having a high coefficient of linear thermal expansion and a low dielectric tangent to be obtained even with a lower degree of crystallization than conventional, and therefore, the crystallization step can be performed under conditions that are more moderate than those conventionally used (low temperature and/or short time).

It is possible to use a crystallizing agent with an objective of promoting crystallization. Examples of the crystallizing agent include oxides and carbonates, etc., of alkali metals or alkaline earth metals. Specific examples of the crystallizing agent include MgCOs, CaCOs, SrCOs, $Li_2O$, $Na_2O$, etc., and it is preferable to use one or more crystallizing agents selected therefrom. When a crystallizing agent is used, the raw material spherical amorphous silica powder and the crystallizing agent are mixed (for example, mixing for 2-10 minutes using a grinder such as a vibrating mill or some kind of mixer, etc.), and thereafter heated in an electric furnace, or the like.

The proportion at which the crystallizing agent is used is preferably 1-10 moles, more preferably 2-8 moles, and even more preferably 3-5 moles with respect to 100 moles of the spherical amorphous silica powder.

In step (i), the amorphous silica powder (preferably, a mixture of the spherical amorphous silica powder and a crystallizing agent) may be mixed with a solvent and thereafter heated to obtain a spherical crystalline silica powder. By heating the mixture of the spherical amorphous silica powder and the solvent, the degree of crystallization and the crystal form can be easily adjusted. Examples of the solvent include water and alcohol. The amount of solvent used may be 1-30 ml with respect to 10 g of the spherical amorphous silica powder.

After being crystallized, the silica powder can, as necessary, be crushed and classified by using a vibrating sieve, etc.

<Step (ii): contact with acid step>

In step (ii), the spherical crystalline silica powder is brought into contact with an acid. Examples of the acid include acids with an acid dissociation constant $pK_a$ at 25°C of 7.0 or less, preferably or 6.0 or less, and more preferably of 5.0 or less. Specific examples of the acid include acetic acid, nitric acid, hydrochloric acid, phosphoric acid, and sulfuric acid, etc., and it is preferable to use one or more acids selected therefrom.

The amount of acid used, for example, may be 50-1,000 ml and may be 100-500 ml with respect to 10 g of the spherical crystalline silica powder.

The method for bringing the spherical crystalline silica powder into contact with the acid is not particularly limited and may, for example, be performed by adding the acid to the spherical crystalline silica powder and mixing.

The mixing method is not particularly limited and may, for example, be performed by putting the spherical crystalline silica powder and an acid aqueous solution into a beaker and stirring at 10-90°C (preferably 30-70°C) for 10-600 minutes (preferably 30-180 minutes).

Thereafter, the mixture is washed a plurality of times using water or ethanol and filtered to remove the acid, and the obtained powder is heated in step (iii).

<Step (iii): heating step>

In step (iii), after undergoing the treatment in step (ii), the spherical crystalline silica powder is heated at 800-1,400°C. The heating temperature is preferably 900-1,300°C and more preferably 1,000-1,200°C. By heating the spherical crystalline silica powder at 800-1,400°C, the number of desorbed water molecules can be reduced without significantly influencing the content of the $\alpha$-quartz crystal and cristobalite crystal. Further, the degree of crystallization can be adjusted easily.

The heating time is preferably 30 minutes-24 hours, more preferably 1-12 hours, and even more preferably 2-8 hours. The heating method is not particularly limited and a publicly-known electric furnace, or the like, may be used.

After allowing to cool naturally inside the electric furnace, the spherical crystalline silica powder is recovered in a state of 110°C-300°C and further cooled to 25°C in an environment with a humidity of 40%RH or less.

The method may comprise, after step (iii), a step of classifying so as to achieve a desired average particle diameter.

The number of desorbed water molecules, the degree of crystallization, the crystal form, the average particle diameter (volume-based cumulative 50% diameter $D_{50}$), the average circularity, and the impurity content, etc., of the obtained spherical crystalline silica powder are as described above, and therefore, descriptions thereof are omitted here.

[Resin Composition] The resin composition according to the present embodiment comprises the spherical crystalline silica powder described above and a resin.

(Resin)

Examples of the resin include thermoplastic resins and thermosetting resins. Examples of the resin include: polyethylene resins; polypropylene resins; epoxy resins; silicone resins; phenol resins; melamine resins; urea resins; unsaturated polyester resins; fluorine resins; polyamide-based resins such as polyimide resins, polyamide imide resins, and polyether imide resins; polyester-based resins such as polybutylene terephthalate resins and polyethylene terephthalate resins; polyphenylene sulfide resins; fully aromatic polyester resins; polysulfone resins; liquid crystal polymer resins; polyether sulfone resins; polycarbonate resins; maleimide modified resins; ABS resins; AAS (acrylonitrile-acrylic rubber-styrene) resins; and AES (acrylonitrile-ethylene-propylene-diene rubber-styrene) resins. The foregoing may be used alone or as a combination of two or more.

When the resin composition is to be used as a high-frequency band substrate or an insulating material, it is possible to employ a publicly-known low-dielectric resin material that is used in such a use. Specifically, it is possible to use at least one resin selected from hydrocarbon-based elastomer resins, polyphenylene-ether resins, and aromatic polyene-based resins. Among the foregoing, a hydrocarbon-based elastomer resin or polyphenylene-ether resin is preferable. The ratio of the foregoing resins is preferably 20-95 mass% and more preferably 30-95 mass% with respect to the total mass of the resin composition.

The content of the spherical crystalline silica powder in the resin composition is not particularly limited and may be adjusted, as appropriate, according to objectives. For example, when applied in a high-frequency substrate material or an insulating material use, the spherical crystalline silica powder may be blended in the range of 5-80 mass% and more preferably in the range of 5-70 mass% with respect to the total mass of the resin composition.

The blending ratios of the resin and the spherical crystalline silica powder in the resin composition can be adjusted, as appropriate, in accordance with targeted dielectric properties such as the coefficient of linear thermal expansion and the dielectric tangent. For example, the amount of the resin can be adjusted in the range of 10-10,000 parts by mass with respect to 100 parts by mass of the spherical crystalline silica powder.

In a range that does not hinder the effects of the present invention, the resin composition may have a hardening agent, a hardening accelerator, a mold release agent, a coupling agent, a coloring agent, or the like, blended therein.

[Method for producing resin composition]

The method for producing the resin composition is not particularly limited, and the resin composition may be produced, for example, by stirring, dissolving, mixing, and dispersing prescribed amounts of each material. The devices used for mixing, stirring, and dispersing, etc., the mixture are not particularly limited, and it is possible to use a grinding machine, a three-roller miller, a ball mill, a planetary mixer, etc., provided with a device for stirring and heating. Further, the foregoing devices may be used in combination, as appropriate.

As described above, resin compositions comprising the spherical crystalline silica powder according to the present embodiment can achieve a high coefficient of linear thermal expansion and a low dielectric tangent. Due thereto, resin compositions comprising the spherical crystalline silica powder according to the present embodiment can be preferably used to produce semiconductor sealing materials for electronic instruments and communication instruments, etc., which have a high-frequency band applied therein. Obtained resin molded articles can suppress cracking and warping, etc., in temperature cycles during use and temperature changes before and after a reflow process.

**EXAMPLES**

The present invention shall be explained in more detail by referring to the examples below, but interpretation of the present invention is not to be limited by these examples.

[Reference example] 10 g of a ground quartz powder ("silicon dioxide 99.9%" manufactured by Fujifilm Wako Pure Chemical Corporation, average particle diameter $D_{50}$: 20.7 $\mu$m) was put into an alumina crucible and subjected to a heat treatment for four hours at an electric furnace internal temperature of 1,000°C. After the heat treatment, the mixture was cooled to 200°C inside the furnace, then cooled to room temperature in a desiccator (23°C-10%RH), and the powder thus obtained was used as the silica powder of the reference example.

Experiment 1

[Example 1-1]

A spherical amorphous silica powder ("FB-5D" manufactured by Denka Co., Ltd., average particle diameter $D_{50}$: 4.5 $\mu$m) and CaCOs were weighed so that the molar ratio ($SiO_2$:$CaCO_3$) was 100:3 and dry-blended for three minutes in a vibration mixer (manufactured by Resodyn Corporation). 50 g of the mixture was put into an alumina crucible, then 5 ml of pure water was added thereto and mixed. Thereafter, the crucible was placed in an electric furnace and subjected to a heat treatment for 12 hours with an electrical furnace interior temperature of 1,000°C (step (i)). After the heat treatment, the mixture was cooled to 200°C inside the furnace, then cooled to room temperature in a desiccator (23°C-10%RH), and the powder thus obtained was crushed using a mortar and classified with a sieve having a mesh size of 200 $\mu$m.

The obtained powder was put in a 500 ml beaker, 500 ml of 1M acetic acid was added dropwise thereto, and stirred and mixed for 60 minutes (step (ii)). Thereafter, the mixture was filtered to remove the acetic acid, the obtained residue was put in an alumina crucible, placed in an electric furnace, and subjected to a heat treatment for four hours with an electric furnace interior temperature of 1,000°C (step (iii)). After the heat treatment, the mixture was cooled to 200°C inside the furnace and then cooled to room temperature in a desiccator (23°C-10%RH) to obtain the spherical crystalline silica powder of Example 1-1.

[Example 1-2]

Other than setting the heating temperature in step (iii) to 1,200°C, the spherical crystalline silica powder of Example 1-2 was obtained by the same method as in Example 1-1.

[Example 1-3]

Other than weighing the spherical amorphous silica powder and the CaCOs in step (i) so that the molar ratio thereof was 100:5 and setting the heating temperature in step (iii) to 1,100°C, the spherical crystalline silica powder of Example 1-3 was obtained by the same method as in Example 1-1.

[Example 1-4]

Other than weighing the spherical amorphous silica powder and the CaCOs in step (i) so that the molar ratio thereof was 100:5 and setting the heating temperature in step (iii) to 1,200°C, the spherical crystalline silica powder of Example 1-4 was obtained by the same method as in Example 1-1.

[Example 1-5]

Other than setting the heat treatment conditions in step (i) so as to be 1,200°C for 24 hours and using 500 ml of 1M nitric acid instead of the acetic acid in step (ii), the spherical crystalline silica powder of Example 1-5 was obtained by the same method as in Example 1-1.

[Comparative Example 1-1]

A spherical amorphous silica powder ("FB-5D" manufactured by Denka Co., Ltd, average particle diameter $D_{50}$: 4.5 $\mu$m) was used as the silica powder of Comparative Example 1 (that is, steps (i)-(iii) were not carried out).

[Comparative Example 1-2]

10 g of the spherical amorphous silica powder of Comparative Example 1-1 was filled in an alumina crucible and subjected to a heat treatment for four hours with an electric furnace interior temperature of 1,000°C. After the heat treatment, the mixture was cooled to 200°C inside the furnace and then cooled to room temperature in a desiccator (23°C-10%RH) to obtain the silica powder of Comparative Example 1-2. Note that when the degree of crystallization was measured using the method described later, the silica powder of Comparative Example 1-2 had the same degree of crystallization as Comparative Example 1-1, crystallization had not proceeded, and the silica powder had remained amorphous.

[Comparative Example 1-3]

A spherical amorphous silica powder ("FB-5D" manufactured by Denka Co., Ltd., average particle diameter $D_{50}$: 4.5 $\mu$m) and CaCOs were weighed so that the molar ratio ($SiO_2$:$CaCO_3$) was 100:1 and dry-blended for three minutes in a vibration mixer (manufactured by Resodyn Corporation). The mixture was put in a crucible, placed in an electric furnace, the temperature was increased in air at a temperature increase rate of 10°C/min. to 1,300°C, and kept at 1,300°C for four hours (step (i)). The mixture was allowed to cool naturally to an ambient temperature in the furnace to obtain the silica powder of Comparative Example 1-3.

Experiment 2

[Example 2-1] A spherical amorphous silica powder ("SFP-30M" manufactured by Denka Co., Ltd., average particle diameter $D_{50}$: 0.68 $\mu$m) and CaCOs were weighed so that the molar ratio ($SiO_2$:$CaCO_3$) was 100:3 and dry-blended for three minutes in a vibration mixer (manufactured by Resodyn Corporation). 50 g of the mixture was put into an alumina crucible, and 5 ml of pure water was added thereto and mixed. Thereafter, the crucible was placed in an electric furnace and subjected to a heat treatment for 12 hours with an electrical furnace interior temperature of 1,100°C (step (i)). After the heat treatment, the mixture was cooled to 200°C inside the furnace, then cooled to room temperature in a desiccator (23°C-10%RH), and the powder thus obtained was crushed using a mortar and classified with a sieve having a mesh size of 200 $\mu$m.
The obtained powder was put in a 500 ml beaker, 500 ml of 1M acetic acid was added dropwise thereto, and stirred and mixed for 60 minutes (step (ii)). Thereafter, the mixture was filtered to remove the acetic acid, the obtained residue was put in an alumina crucible, placed in an electric furnace, and subjected to a heat treatment for four hours with an electric furnace interior temperature of 1,000°C (step (iii)). After the heat treatment, the mixture was cooled to 200°C inside the furnace and then cooled to room temperature in a desiccator (23°C-10%RH) to obtain the spherical crystalline silica powder of Example 2-1.

[Example 2-2]

Other than setting the heat treatment conditions in step (i) so as to be 1,000°C for six hours, the spherical crystalline silica powder of Example 2-2 was obtained by the same method as in Example 2-1.

[Comparative Example 2-1]

Other than not carrying out step (iii), the silica powder of Comparative Example 2-1 was obtained by the same method as in Example 2-1.

[Comparative Example 2-2]

Other than not carrying out step (iii), the silica powder of Comparative Example 2-2 was obtained by the same method as in Example 2-2.

[Comparative Example 2-3]

A spherical amorphous silica powder ("SFP-30M" manufactured by Denka Co., Ltd., average particle diameter $D_{50}$: 0.68 $\mu$m) was used as the silica powder of Comparative Example 2-3 (that is, steps (i)-(iii) were not carried out).

[Comparative Example 2-4]

10 g of the spherical amorphous silica powder of Comparative Example 2-3 was filled in an alumina crucible and subjected to a heat treatment for four hours with an electric furnace interior temperature of 1,000°C. After the heat treatment, the mixture was cooled to 200°C inside the furnace and then cooled to room temperature in a desiccator (23°C-10%RH) to obtain the silica powder of Comparative Example 2-4. Note that when the degree of crystallization was measured using the method described later, the silica powder of Comparative Example 2-4 had the same degree of crystallization as Comparative Example 2-3, crystallization had not proceeded, and the silica powder had remained amorphous.

Experiment 3

[Example 3-1]

Other than setting the heat treatment conditions in step (i) so as to be 1,200°C for four hours and using 500 ml of 1M nitric acid instead of the acetic acid in step (ii), the spherical crystalline silica powder of Example 3-1 was obtained by the same method as in Example 1-1.

[Example 3-2]

Other than setting the heat treatment conditions in step (i) so as to be 1,100°C for six hours, using 500 ml of 1M nitric acid instead of the acetic acid in step (ii), and setting the heat treatment conditions in step (iii) so as to be 1,100°C for four hours, the spherical crystalline silica powder of Example 3-2 was obtained by the same method as in Example 1-1.

[Comparative Example 3-1]

Other than not carrying out steps (ii) and (iii), the silica powder of Comparative Example 3-1 was obtained by the same method as in Example 3-1.

[Comparative Example 3-2]

Other than not carrying out steps (ii) and (iii), the silica powder of Comparative Example 3-2 was obtained by the same method as in Example 3-2.

[Measurement]

Physical properties were measured by the methods described below for the silica powders obtained in the examples and comparative examples. The results are shown in Tables 1-3.
(XRD measurement: identification of crystal form in powder, measurement of content thereof, and measurement of degree of crystallization)
Using a sample horizontal type multipurpose X-ray diffraction device (product name: RINT-Ultima IV, manufactured by Rigaku Corporation) as a measurement device, X-ray diffraction patterns of the powders obtained in the examples and comparative examples were measured under the following measurement conditions.

X-ray source: CuKα

Tube voltage: 40 kV

Tube current: 40 mA

Scanning speed: 10.0°/min.

2θ scanning range: 10°-80°

Rietveld method software (product name: Integrated powder X-ray software Jade+9.6, manufactured by MDI) was used in quantitative analysis of the crystal form. Note that X-ray diffraction measurement was performed on a sample obtained by adding α-alumina (internal reference substance) (manufactured by NIST), which is a reference sample for X-ray diffraction, to the silica powder such that the content of the α-alumina was 50 mass% (based on the total weight of the spherical crystalline silica powder after the addition), and the ratio (mass%) of each kind of crystal form was calculated by Rietveld analysis.

Tables 1-3 show the ratio of α-quartz crystal as "Qua (wt%)" and show the ratio of cristobalite crystal as "Cri (wt%)".

For each crystal, an integral area of a reference crystalline peak and of a crystalline peak of a fabricated sample were determined, and the ratio of the crystalline areas was used as the degree of crystallization. That is, the degree of crystallization was calculated by the following formula.

Degree of crystallization = integral area of peak of obtained crystalline silica/peak area of crystalline silica standard substance.

Tables 1-3 show the ratio of α-quartz crystal as "Qua (wt%)" and show the ratio of cristobalite crystal as "Cri (wt%)".

(ICP measurement)

Impurities in the silica powders obtained in the examples and comparative examples were measured as described below.

1.2 ml of 46% hydrofluoric acid and 5 ml of ultrapure water were added to 1.0 g of the silica powder, and this was dried on a 120°C hotplate. 0.3 ml of 96% sulfuric acid was added to the obtained residue, and after heating, the liquid component was rendered to 6 ml to create a measurement sample. Further, the solid component generated was filtered and recovered, and after heating the filter paper by an electric furnace at 500°C for two hours, the obtained solid component was subjected to alkaline dissolution and salt dissolution before being rendered to 6 ml. Thereafter, measurement samples were analyzed using ICP optical emission spectroscopy (ICP optical emission spectrometer, product name: CIROS-120, manufactured by Spectro Analytical Instruments GmbH) and the content of impurities in the spherical crystalline silica powder was measured.

(Coefficient of liner thermal expansion: CTE1, CTE2)

A liquid-state epoxy resin ("JER 828" manufactured by Mitsubishi Chemical Company) and a hardening agent (4,4-Diaminodiphenylmethane) were mixed at a weight ratio of 4:1, a silica powder was mixed therein so as to be 40 vol.% thereof, and the mixture was cured at 200°C for four hours to make a cured body. Thereafter, the cured body was processed to ultimately obtain a test piece with a size of 4 mm × 4 mm × 15 mm.

A TMA device (TMA 4000SA manufactured by Bruker Corporation) was used to evaluate the coefficient of linear thermal expansion.

For measurement conditions, the temperature increase rate was set at 3°C/min., the measurement temperature was set at -10°C-270°C, and the atmosphere was set to a nitrogen atmosphere, and from the obtained results, the coefficient of linear thermal expansion (CTE1) at or below the glass transition temperature Tg (155-160°C or less) and the coefficient of thermal linear expansion (CTE2) in a temperature region exceeding the glass transition temperature Tg (exceeding 160°C) were calculated. The results are shown in Tables 1-3.

Note that the coefficients of thermal expansion of a resin composition which did not have the silica powder mixed therein were $3.4 \times 10^{-5}$ (CTE1) and $9.7 \times 10^{-5}$ (CTE2).

Fig. 1 shows the thermal expansion behavior measured for test pieces using the silica powder of the reference example, Example 1-5, Comparative Example 1-1, and Comparative Example 1-3. As shown in fig. 1, the resin molded article comprising the silica powder of Example 1-5 demonstrated thermal expansion behavior resembling that of the resin molded article comprising ground quartz (reference example). The resin molded article comprising the reference example (ground quartz) and the resin molded article comprising the silica powder of Example 1-5 have higher coefficients of linear thermal expansion (CTE1 and CTE2) than the resin molded article comprising the silica powder of Comparative Example 1-1 (spherical amorphous silica powder). When the silica powder of Comparative Example 1-3 (having spherical cristobalite crystal; not including $\alpha$-quartz crystal) is used, although the coefficient of linear thermal expansion is high, changes in reflow temperatures (240-260°C) are large and there are cases in which it is difficult to adjust the thermal expansion behavior of the resin molded article near this temperature. In contrast thereto, in the resin molded article comprising the silica powder of Example 1-5, there is not a large change in the coefficient of linear thermal expansion near the reflow temperature, and therefore, it is easy to control the thermal expansion behavior of the resin molded article.

(Evaluation of dielectric properties)

The silica powder and a polyethylene resin powder (product name: Flo-thene® UF-20S, manufactured by Sumitomo Seika Chemicals Co., Ltd.) or a polypropylene (PP) powder (Flow-blen QB200, manufactured by Sumitomo Seika Chemicals Co., Ltd.) were weighed so that the filled content of the silica powder was 40 vol.% and mixed using a vibration mixer (manufactured by Resodyn Corporation) with an acceleration rate of 60 G and a processing time of two minutes to obtain a resin composition. The obtained resin composition was loaded, at an amount such that the thickness thereof was approximately 0.3 mm, into a metal frame with a diameter of 3 cm and was rendered into a sheet by a nanoimprinting device (product name: X-300, manufactured by SCIVAX Corporation) under conditions of 30,000 N and 140°C for five minutes. The obtained sheet was cut into 1.5 cm $\times$ 1.5 cm sizes to obtain evaluation samples.
Next, a 36 GHz cavity resonator (manufactured by Samtech. Co., Ltd.) was connected to a vector network analyzer (product name: 85107, manufactured by Keysight Technologies), an evaluation sample was arranged so as to cover a 10 mm-diameter hole provided in the cavity resonator, and a resonance frequency (f0) and an unloaded Q value (Qu) were measured. The same measurement was repeated five times with the evaluation sample being rotated 90 degrees after each measurement. Average values of the obtained f0 and Qu values were used as measured values and analytical software (software manufactured by Samtech. Co., Ltd.) was used to calculate the dielectric constant from f0 and the dielectric tangent (tan $\delta$c) from Qu. Note that measurements were carried out in conditions with a measurement temperature of 20°C and a humidity of 60%RH.

(Number of desorbed water molecules)

An area value in a 50°C-1,000°C range in a mass chromatogram (m/z=18) was measured, the mass chromatogram having been obtained by using a Pyrolyzer GC/MS system (comprising a combination of a gas chromatography mass spectrometer (JMS-Q1500GC) manufactured by JEOL Ltd. and a multi-shot pyroloyzer (EGA/PY-3030D) manufactured by Frontier Laboratories, Ltd.), and increasing the temperature from 25°C to 1,000°C at 30°C/min. The number of desorbed water molecules was calculated from the measured area value by drawing a calibration curve with aluminum hydroxide (manufactured by Kojundo Chemical Lab. Co., Ltd.) as a standard substance with a known amount of dehydration.
In calculating the amount of dehydration of the aluminum hydroxide used as the standard substance, the amount of decrease in specific gravity from 200° to 320°C using a thermogravimetric differential thermal analysis device (high-sensitivity simultaneous thermogravimetric differential balance STA 2500 Regulus, manufactured by Netzsch) and increasing the temperature from 25°C at 10°C/min. was used as the amount of dehydration.

(Measurement of thermal conductivity)

The thermal conductivity of the resin composition was calculated by multiplying thermal diffusivity, specific gravity, and specific heat. After being cured, a sample sheet was processed to 10 mm $\times$ 10 mm $\times$ 1 mm and thermal diffusivity was determined by a laser flash method. A xenon flash analyzer (product name: LFA 447 NanoFlash, manufactured by Netzsch) was used as the measurement device. The specific gravity was determined by using the Archimedes method. The specific heat was determined by using a differential scanning calorimeter (product name: Q2000, manufactured by TA Instruments) and increasing the temperature from room temperature to 200°C at a temperature increase rate of 10°C/min. in a nitrogen atmosphere.

[TABLE 1]

| Raw material amorphous spherical silica $D_{50}$: 4.5 $\mu m$ | Step (i) Ratio (molar ratio) SiO$_2$ | Step (i) Ratio (molar ratio) CaCO$_3$ | Step (i) Firing conditions Temp (°C) | Step (i) Firing conditions Time (h) | Step (ii) Acid wash (acid used) | Step (iii) Temp (°C) | Step (iii) Time (h) | XRD Qua (wt%) | XRD Cri (wt%) | XRD Degree of crystallization (%) | EGA-MS No. of water molecules ($\mu mol/g$) | ICP CaO amount (oxide conversion) ($\mu g/g$) | ICP Al amount (ppm) | Coefficient of linear thermal expansion (10$^{-5}$/K) CTE1 $\times$10$^{-5}$/K | Coefficient of linear thermal expansion (10$^{-5}$/K) CTE2 $\times$10$^{-5}$/K | Resin sheet Dielectric constant ($\varepsilon$ r) | Resin sheet Dielectric dissipation factor (tan $\delta$) | Specific surface area BET (m$^2$/g) | Thermal conductivity W/(m*K) |
|---|---|---|---|---|---|---|---|---|---|---|---|---|---|---|---|---|---|---|---|
| Example 1-1 | 100 | 3 | 1000 | 12 | Acetic acid | 1000 | 4 | 46.8 | 0 | 46.8 | 3.3 | 8000 | 530 | 3.8 | 10.7 | 2.76 | 6.3.E-04 | 1.7 | 0.584 |
| Example 1-2 | 100 | 3 | 1000 | 12 | Acetic acid | 1200 | 4 | 57.5 | 1.7 | 59.2 | 3.1 | 6000 | 510 | 3.9 | 10.7 | 2.65 | 5.7.E-04 | 1.2 | 0.642 |
| Example 1-3 | 100 | 5 | 1000 | 12 | Acetic acid | 1100 | 4 | 74.4 | 0 | 74.4 | 3.5 | 4000 | 590 | 3.8 | 10.6 | 2.89 | 59E-04 | 1.5 | 0.698 |
| Example 1-4 | 100 | 5 | 1000 | 12 | Acetic acid | 1200 | 4 | 77.3 | 3.2 | 80.5 | 3.5 | 5000 | 520 | 3.9 | 10.7 | 2.68 | 6.1.E-04 | 1.2 | 0.720 |
| Example 1-5 | 100 | 3 | 1200 | 24 | Nitric acid | 1000 | 4 | 50.5 | 29.3 | 79.7 | 3.2 | 3000 | 1100 | 4.1 | 10.9 | 2.84 | 6.2.E-04 | 1.3 | 0.754 |
| Comp Ex 1-1 | - | - | - | - | - | - | - | 1.48 | 0 | 1.48 | 38.2 | 32 | 580 | 3.4 | 9.7 | 2.81 | 8.4.E-04 | 2.3 | 0.458 |
| Comp Ex 1-2 | - | - | - | - | - | 1000 | 4 | 1.48 | 0 | 1.48 | 5.5 | 30 | 560 | 3.4 | 9.7 | 2.69 | 4.7.E-04 | 2.2 | 0.471 |
| Comp Ex 1-3 | 100 | 1 | 1300 | 4 | - | - | - | 0 | 95.6 | 95.6 | 3.5 | 900 | 4000 | 4.6 | 11.8 | 2.62 | 1.3.E-03 | - | 0.760 |
| Ref Ex 1 (ground quartz) | - | - | - | - | - | 1000 | 4 | 100 | 0 | 100 | - | 60 | 610 | 3.9 | 10.8 | 2.84 | 3.5.E-04 | - | 0.948 |

EP 4 389 704 A1

[TABLE 2]

| Raw material amorphous spherical silica D$_{50}$: 0.68 $\mu$m | Step (i) | | | | Step (ii) | Step (iii) | | XRD | | | EGA-MS | ICP | | Coefficient of linear thermal expansion (10$^{-5}$/K) | | Resin sheet | | Specific surface area | Thermal conductivity |
|---|---|---|---|---|---|---|---|---|---|---|---|---|---|---|---|---|---|---|---|
| | Ratio (molar ratio) | | Firing conditions | | Acid wash (acid used) | Temp (°C) | Time (h) | Qua | Cri | Degree of crystallization | No. of water molecules | CaO amount (oxide conversion) | Al amount | CTE1 | CTE2 | Dielectric constant ($\varepsilon r$) | Dielectric dissipation factor (tan $\delta$) | BET | |
| | SiO$_2$ | CaCO$_3$ | Temp (°C) | Time (h) | | | | (wt%) | (wt%) | (%) | ($\mu$mol/g) | ($\mu$g/g) | (ppm) | $\times$ 10$^{-5}$/K | $\times$ 10$^{-5}$/K | | | (m$^2$/g) | W/(m*K) |
| Comp Ex 2-1 | 100 | 3 | 1100 | 12 | Acetic acid | | | 38.5 | 34.5 | 73 | 18.2 | 3000 | 160 | 4.1 | 11 | 2.75 | 1.4.E-03 | 4.7 | 0.732 |
| Example 2-1 | 100 | 3 | 1100 | 12 | Acetic acid | 1000 | 4 | 37.9 | 35.6 | 73.5 | 82 | 2800 | 140 | 4.1 | 11.1 | 2.69 | 6.2.E-04 | 4.5 | 0.754 |
| Comp Ex 2-2 | 100 | 3 | 1000 | 6 | Acetic acid | | | 31.1 | 8.1 | 39.2 | 21.5 | 3200 | 170 | 3.8 | 10.6 | 2.84 | 1.5.E-03 | 5.1 | 0.548 |
| Example 2-2 | 100 | 3 | 1000 | 6 | Acetic acid | 1000 | 4 | 30.8 | 8.5 | 39.3 | 8.5 | 2400 | 180 | 3.9 | 10.7 | 2.68 | 5.9.E-04 | 5 | 0.576 |
| Comp Ex 2-3 | - | - | - | - | - | - | - | 0 | 0 | 0 | 36.1 | 10 | 150 | 3.4 | 9.7 | 2.69 | 1.1E-03 | 6 | 0.439 |
| Comp Ex 2-4 | - | - | - | - | - | 1000 | 4 | 0 | 0 | 0 | 17.4 | 10 | 160 | 3.4 | 9.7 | 2.78 | 6.6.E-04 | 5.9 | 0.452 |

[TABLE 3]

| Raw material amorphous spherical silica $D_{50}$: 4.5 μm | Step (i) Ratio (molar ratio) SiO₂ | Step (i) Ratio (molar ratio) CaCO₃ | Step (i) Firing conditions Temp (°C) | Step (i) Firing conditions Time (h) | Step (ii) Acid wash (acid used) | Step (iii) Temp (°C) | Step (iii) Time (h) | XRD EGA-MS Qua (wt%) | XRD EGA-MS Cri (wt%) | XRD EGA-MS Degree of crystallization (%) | XRD EGA-MS No. of water molecules (μmol/g) | ICP CaO amount (oxide conversion) (μg/g) | ICP Al amount (ppm) | CTE1 ×10⁻⁵/K | CTE2 ×10⁻⁵/K | Resin conversion sheet Dielectric constant (ε r) | Resin conversion sheet Dielectric dissipation factor (tan δ) | Specific surface area BET (m²/g) | Thermal conductivity W/(m*K) |
|---|---|---|---|---|---|---|---|---|---|---|---|---|---|---|---|---|---|---|---|
| Example 3-1 | 100 | 3 | 1200 | 4 | Nitric acid | 1000 | 4 | 45.0 | 35.9 | 80.85 | 3.1 | 4000 | 3200 | 42 | 11.1 | 2.84 | 6.2.E-04 | 1.5 | 0.739 |
| Comp Ex 3-1 | 100 | 3 | 1200 | 4 | - | - | - | 45.0 | 35.9 | 80.85 | 17.2 | 28000 | 2600 | 4.2 | 11.1 | 2.90 | 1.5.E-03 | 1.5 | 0.719 |
| Example 3-2 | 100 | 3 | 1100 | 6 | Nitric acid | 1100 | 4 | 65.1 | 19.0 | 84.10 | 3.3 | 5000 | 2100 | 4 | 10,7 | 2.83 | 6.8.E-04 | 1.4 | 0.770 |
| Comp Ex 3-2 | 100 | 3 | 1100 | 6 | - | - | - | 65.1 | 19.0 | 84.10 | 17.8 | 24000 | 1200 | 3.9 | 10.7 | 2.89 | 1.7.E-03 | 1.5 | 0.757 |

As shown in Tables 1-3, the spherical crystalline silica powders of the examples in which the number of desorbed water molecules is 10 μmol/g or less and 10 mass% or more of the total powder is α-quartz crystal all enabled a resin molded article having high coefficients of linear thermal expansion (CTE1 and CTE2) and a low dielectric tangent to be obtained. Further, the obtained resin molded articles have a high dielectric constant and a high thermal conductivity. Furthermore, the coefficient of linear thermal expansion (CTE2) is approximately the same as that of the reference example (ground quartz), and therefore, the thermal behavior of the resin molded article near the reflow temperature can be controlled easily.

In contrast thereto, results show that the amorphous silica powders of Comparative Example 1-1 and Comparative Example 2-3, in which the number of desorbed water molecules exceeds 10 μmol/g and in which less than 10 mass% thereof is α-quartz crystal, have low coefficients of linear thermal expansion and a high dielectric tangent.

The results also show that although the amorphous silica powders of Comparative Example 1-2 and Comparative Example 2-4, in which less than 10 mass% thereof is α-quartz crystal, have a low dielectric tangent, the coefficients of linear thermal expansion (CTE1 and CTE2) are low.

The results further show that in the crystalline silica powder of Comparative Example 1-3 which does not comprise α-quartz crystal, the coefficient of linear thermal expansion is a high value but the dielectric tangent is high. As shown in Table 1, in the silica powder of Comparative Example 1-3, there is a large change in the thermal expansion behavior of the resin molded product near the reflow temperature, and therefore, it is difficult to control the thermal expansion behavior of the resin molded article.

The results show that in the silica powders of Comparative Examples 2-1, 2-2, 3-1, and 3-2, in which the number of desorbed water molecules exceeds 10 μmol/g, the coefficients of linear thermal expansion are high values but the dielectric tangent is high.

Focusing on thermal conductivity, the spherical crystalline silica powder of each of the examples could realize a high thermal conductivity of 0.48 W/mK or more. As is clear from Tables 1-3, it was discovered that thermal conductivity improves as a raw material amorphous spherical silica goes through a process comprising being crystallized (step (i)), and further, being brought into contact with an acid and subjected to a heat treatment (steps (ii) and (iii)).

**INDUSTRIAL APPLICABILITY**

As described above, the spherical crystalline silica powder according to the present invention has a characteristic of enabling a resin molded article having a high coefficient of linear thermal expansion and a low dielectric tangent to be obtained. A resin molded article comprising such a spherical crystalline silica powder can, for example, be suitably used as a sealing material filler of a semiconductor element.

**Claims**

1. A spherical crystalline silica powder in which the number of water molecules desorbed at 50°C-1,000°C when the temperature is increased from 25°C to 1,000°C at a condition of 30°C/min. is 10 μmol/g or less, and in which 10 mass% or more of the total powder is α-quartz crystal.

2. The spherical crystalline silica powder according to claim 1, wherein the degree of crystallization of the total powder, as measured by an X-ray diffraction method, is 30-98%.

3. The spherical crystalline silica powder according to claim 1 or 2, wherein 20-90 mass% of the total powder is α-quartz crystal.

4. The spherical crystalline silica powder according to claim 1 or 2, wherein 0-70 mass% of the total powder is cristobalite crystal.

5. The spherical crystalline silica powder according to claim 1 or 2, wherein the content of alkaline-earth metal elements therein is less than 10,000 μg/g by oxide conversion.

6. A resin composition comprising the spherical crystalline silica powder according to claim 1 or 2 and a resin.

7. A method for producing a spherical crystalline silica powder, the method comprising:

   (i) heating a spherical amorphous silica powder to obtain a spherical crystalline silica powder;
   (ii) bringing the spherical crystalline silica powder into contact with an acid; and

(iii) heating, at 800-1,400°C, the spherical crystalline silica powder treated by (ii).

8. The method for producing a spherical crystalline silica powder according to claim 7, wherein the spherical crystalline silica powder is obtained by heating a mixture of a spherical amorphous silica powder and a solvent in (i).

[FIG. 1]

## INTERNATIONAL SEARCH REPORT

| International application No. |
|---|
| **PCT/JP2022/031305** |

### A. CLASSIFICATION OF SUBJECT MATTER

*C01B 33/18*(2006.01)i; *C01B 33/12*(2006.01)i; *C08K 3/36*(2006.01)i; *C08L 101/00*(2006.01)i
FI: C01B33/18 Z; C01B33/12 B; C08K3/36; C08L101/00

According to International Patent Classification (IPC) or to both national classification and IPC

### B. FIELDS SEARCHED

Minimum documentation searched (classification system followed by classification symbols)

C01B33/00-33/193; C08K3/36; C08L101/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | WO 2020/195205 A1 (DENKA COMPANY LIMITED) 01 October 2020 (2020-10-01) entire text, all drawings | 1-8 |
| A | WO 2018/186308 A1 (NIPPON STEEL & SUMIKIN MATERIALS CO., LTD.) 11 October 2018 (2018-10-11) entire text, all drawings | 1-8 |
| A | JP 2005-231973 A (SUMITOMO CHEMICAL CO LTD) 02 September 2005 (2005-09-02) entire text, all drawings | 1-8 |
| A | OKABAYASHI, M. et al. Chemistry Letters. 11 December 2004, vol. 34, pp. 58-59, <DOI:10.1246/cl.2005.58> entire text, all drawings | 1-8 |
| A | JP 02-022119 A (TOKUYAMA SODA CO LTD) 25 January 1990 (1990-01-25) entire text, all drawings | 1-8 |
| A | JP 49-8638 B1 (PILKINGTON BROTHERS LTD.) 27 February 1974 (1974-02-27) entire text, all drawings | 1-8 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 October 2022** | **25 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/031305** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 04-238808 A (NIPPON STEEL CHEM CO LTD) 26 August 1992 (1992-08-26)<br>        entire text, all drawings | 1-8 |
| P, A | JP 2021-178770 A (DENKA COMPANY LIMITED) 18 November 2021 (2021-11-18)<br>        entire text, all drawings | 1-8 |

Form PCT/ISA/210 (second sheet) (January 2015)

**INTERNATIONAL SEARCH REPORT**
Information on patent family members

International application No.

**PCT/JP2022/031305**

| Patent document cited in search report | | | Publication date (day/month/year) | Patent family member(s) | | | Publication date (day/month/year) |
|---|---|---|---|---|---|---|---|
| WO | 2020/195205 | A1 | 01 October 2020 | EP | 3950588 | A1 | |
| | | | | entire text, all drawings | | | |
| | | | | JP | 2021-38138 | A | |
| | | | | CN | 113614036 | A | |
| | | | | KR | 10-2021-0142632 | A | |
| | | | | TW | 202035287 | A | |
| WO | 2018/186308 | A1 | 11 October 2018 | US | 2020/0148544 | A1 | |
| | | | | entire text, all drawings | | | |
| | | | | CN | 110636989 | A | |
| | | | | KR | 10-2019-0135004 | A | |
| | | | | TW | 201841834 | A | |
| JP | 2005-231973 | A | 02 September 2005 | (Family: none) | | | |
| JP | 02-022119 | A | 25 January 1990 | (Family: none) | | | |
| JP | 49-8638 | B1 | 27 February 1974 | US | 3565595 | A | |
| | | | | entire text, all drawings | | | |
| | | | | GB | 1156066 | A | |
| | | | | DE | 1696585 | A | |
| | | | | FR | 1559963 | A | |
| JP | 04-238808 | A | 26 August 1992 | (Family: none) | | | |
| JP | 2021-178770 | A | 18 November 2021 | WO | 2021/215519 | A1 | |
| | | | | TW | 202142487 | A | |

Form PCT/ISA/210 (patent family annex) (January 2015)

**EP 4 389 704 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016031823 A
- JP 2005231973 A
- JP 2021038138 A